# EUROPÄISCHE PATENTSCHRIFT

(11) **EP 0 708 745 B1**
(45) Veröffentlichungstag und Bekanntmachung des Hinweises auf die Patenterteilung: **14.01.1998**
(21) Anmeldenummer: 94920976.1
(22) Anmeldetag: 07.07.1994
(51) Int. Cl.: C04B 14/24, C04B 30/00, G21F 1/06, E04B 1/98

(54) **STOSSDÄMPFENDE ANORDNUNG UND VERFAHREN ZU IHRER HERSTELLUNG**
SHOCK-ABSORBING SYSTEM AND METHOD OF MANUFACTURING IT
SYSTEME AMORTISSEUR ET SON PROCEDE DE FABRICATION

(30) Priorität: 14.07.1993 DE 4323476
(43) Veröffentlichungstag der Anmeldung: 01.05.1996
(73) Patentinhaber: STEAG Kernenergie GmbH, D-45117 Essen (DE)
(72) Erfinder: RENK, Klaus-Dieter, D-46562 Voerde (DE); GEMBUS, Hans-Dieter, D-30982 Pattensen (DE)
(86) Internationale Anmeldenummer: EP9402230
(87) Internationale Veröffentlichungsnummer: WO9502562

(56) Entgegenhaltungen:
- EP-A- 0 173 636
- DE-A- 4 008 047
- DE-A- 4 114 538
- DE-C- 3 905 871
- FR-A- 2 463 756
- DATABASE WPI Section Ch, Week 8918, Derwent Publications Ltd., London, GB; Class A93, AN 89-132773 & JP,A,1 075 752 (OHZEKI KAGAKU KOGYO) 22. März 1989
- CHEMICAL ABSTRACTS, vol. 115, no. 24, 16. Dezember 1991, Columbus, Ohio, US; abstract no. 261987d, E.R.SAAKYAN 'Heat.insulating properties of enclosing structures based on foamed glass granulate' Seite 375 ; & STROIT. MATER., Bd.6, USSR Seiten 3 - 4

## Beschreibung

Die Erfindung betriff eine Anordnung zum Schutz einer Struktur, insbesondere eines Gebäudes, gegen Stöße, mit mindestens einer auf einer Unterlage vorgesehenen Schicht aus Stoßenergie irreversibel absorbierendem Dämpfungsmaterial unter Einsatz von Glasschaum. Ferner betrifft die Erfindung ein Verfahren zum Herstellen einer solchen Schicht aus Dämpfungsmaterial.

Hauptanwendungsgebiet der Erfindung ist die Abschirmung von kerntechnischen Anlagen und von Schutzräumen gegen Stoßeinwirkungen, wie sie beispielsweise von abstürzenden Lasten und von aufprallenden Fahrzeugen, insbesondere abstürzenden Flugzeugen, hervorgerufen werden. Bisher hat man als Dämpfungsmaterial Beton mit eingelagerten Kugeln aus expandiertem Polystyrol verwendet. Dieses Material besitzt jedoch Eigenschaften, die unter Umwelt-Gesichtspunkten nicht optimal sind. So ist Polystyrol brennbar. Auch kann es in strahlenbelasteter Umgebung radioaktiv werden und zerfallen. Ferner ist das Dämpfungsmaterial nicht rezyklierbar, da es aus organischen und anorganischen Substanzen besteht.

Aus der DE A-4 008 047 ist eine Anordnung der eingangs genannten Art bekannt, bei der die Schicht aus Stoßenergie irreversibel absorbierendem Dämpfungsmaterial aus Glasschaumelementen besteht. Dabei sind die stoßdämpfenden Eigenschaften der Schicht nur in geringem Umfang einstellbar.

Der Erfindung liegt die Aufgabe zugrunde, hier Abhilfe zu schaffen und die Einstellbarkeit der stoßabsorbierenden Eigenschaften der Schutzschicht zu verbessern.

Zur Lösung dieser Aufgabe ist die eingangs genannte Anordnung erfindungsgemäß dadurch gekennzeichnet, daß der Glasschaum als Granulat in ein Matrixmaterial eingebunden ist.

Die Einbindung von Glaskugelchen um in ein Matrixmaterial ist aus der EP-A-173 636 bekannt. Die so gebildete Schutzschicht wird auf das Mauerwerk aufgetragen und sodann mit einem äußeren Überzug bedeckt, beispielsweise mit einem Farbanstrich. Stoßenergie. Die Schutzschicht soll verhindern, daß Risse, die praktisch unvermeidbarerweise im Mauerwerk entstehen, sich bis in den Farbanstrich fortsetzen und diesen aufreißen. Hierzu wird als Matrixmaterial ein Harz verwendet, das ausreichend flexibel ist, um Rollbewegungen zwischen den Granulatkügelchen zuzulassen.

Erfindungsgemäß wird das Material der Matrix so ausgewählt, daß es zur irreversiblen Absorption der Stoßenergie beiträgt.

Bei Einbindung des Glasschaums in das Matrixmaterial stehen drei Parameter für die exakte Einstellung der stoßdämpfenden Eigenschaften zur Verfügung, nämlich zum einen die Dichte des Glasschaums, zum anderen die Festigkeit des Matrixmaterials und schließlich das Mengenverhältnis zwischen den beiden Materialien. Hieraus und aus der zu erwartenden Belastung bestimmt sich die Mindestdicke der Schutzschicht.

Der Glasschaum kann bereits bei der Herstellung als Granulat erzeugt werden. Auch besteht die Möglichkeit, den Glasschaum als Block oder Bahn auszuhärten und anschließend zu granulieren.

Glasschaum ist unbrennbar und emittiert bei Erhitzung weder Dämpfe noch Gase. Auch ist er strahlenbeständig und ferner rezyklierbar, so daß keine Entsorgungsprobleme auftreten. Vorteilhaft ist auch die Langzeitbeständigkeit. Glasschaum ist geschlossenporig und kann daher keine Kontaminationen aufnehmen. Auch ist das Material inert gegen chemische Angriffe. Ferner enthält es keine auswaschbaren Bestandteile. Vor allen Dingen handelt es sich um extrem billiges Material, das ohne weiteres auch aus Abfallglas hergestellt werden kann.

Ferner ist die Schutzschicht sehr gut in der Lage, Gebrauchslasten abzutragen. Dies war bei gebräuchlichem Beton mit Polystyroleinschlüssen bisher nicht der Fall.

Als Matrixmaterial kommt vorteilhafterweise Zement oder eine zementgebundene Masse zur Anwendung. Die Schutzschicht besteht sodann aus rein anorganischen Materialien, so daß eine problemlose Rezyklierung möglich wird.

In Weiterbildung der Erfindung wird vorgeschlagen, daß die Schicht aus Dämpfungsmaterial als Vergußschicht auf der Unterlage angeordnet ist. Das Vergußmaterial besteht aus einem Matrixmaterial mit eingebundenem Glasschaum-Granulat und kann problemlos aufgetragen werden, beispielsweise wie normaler Beton.

Erwähnt sei ferner, daß sich im Rahmen der Erfindung mehrere Schichten gleicher oder unterschiedlicher Art übereinander anordnen lassen. Vor allen Dingen besteht auch die Möglichkeit, unterschiedlichen Schutzschichtbereichen unterschiedliche Stoßdämpfungseigenschaften zuzuordnen.

Die Abtragung der Verkehrslasten läßt sich dadurch verbessern, daß die Schicht aus Dämpfungsmaterial mit einer Abdeckung, insbesondere einer Estrichschicht überdeckt wird. Vor allen Dingen ist hervorzugeben, daß die Abdeckung auch zur Einstellung der stoßdämpfenden Eigenschaften herangezogen werden kann. Die Abdeckung kann aus den im Straßenbau üblichen Materialien bestehen. Neben einer Vergußschicht kommen auch Platten in Frage, die lose aufgelegt oder über der gesamten Fläche bzw. nur über Flächenabschnitten miteinander verbunden sind. Die Abdeckung kann auch als Zwischenlage Verwendung finden.

Für sämtliche Ausführungsmöglichkeiten der Erfindung gilt, daß die Herstellung der Schutzschicht vor allen Dingen deshalb problemlos möglich ist, weil die im Baugewerk üblichen Geräte benutzt werden können.

Ein besonders einfaches Herstellungsverfahren ist erfindungsgemäß dadurch gekennzeichnet, daß man einen Beton mit Glasschaum-Granulat als Zuschlagstoff erzeugt, auf der Unterlagen vergießt und sodann aushärten läßt, wobei man auf der Schicht aus Dämpfungsmaterial vorzugsweise eine Estrichschicht vergießt und sodann aushärten läßt.

Der Anwendungsbereich der Erfindung beschränkt sich nicht auf kerntechnische Anlagen, Schutzräume und dergleichen. Vielmehr gibt es eine große Zahl sonstiger sensibler Anlagen, für die eine derartige Schutzschicht von Vorteil sein kann. Erwähnt seien beispielsweise militärische Einrichtungen sowie Schutzzonen, die gegen Komponentenabsturz gesichert werden müssen. Auch die Abschirmung von Banken gegen Einwirkungen Dritter kommt in Frage. Ein weiteres Anwendungsgebiet sind Transportverpackungen für radioaktive oder sonstige gefährliche oder zu schützende Güter, ferner Transporteinrichtungen, wie z.B. Lokomotiven, zugehörige Prallrampen und dergleichen. Außerdem sind Abschirmungen überall dort erforderlich, wo Sprengungen, Abbrucharbeiten und dergleichen durchgeführt werden. Schließlich können auch Versuchseinrichtungen vielfältiger Art so gefährlich oder gefährdet sein, daß sie der speziellen Abschirmung bedürfen.

## Patentansprüche

1. Anordnung zum Schutz einer Struktur, insbesondere eines Gebäudes, gegen Stöße, mit mindestens einer auf einer Unterlage vorgesehenen Schicht aus Stoßenergie irreversibel absorbierendem Dämpfungsmaterial unter Einsatz von Glasschaum,
**dadurch gekennzeichnet,**
daß der Glasschaum als Granulat in ein Matrixmaterial eingebunden ist.

2. Anordnung nach Anspruch 1, dadurch gekennzeichnet, daß das Matrixmaterial Zement oder eine zementgebundene Masse, ist.

3. Anordnung nach Anspruch 1 oder 2, dadurch gekennzeichnet, daß die Schicht aus Dämpfungsmaterial als Vergußschicht auf der Unterlage angeordnet ist.

4. Anordnung nach einem der Ansprüche 1 bis 3, dadurch gekennzeichnet, daß die Schicht aus Dämpfungsmaterial mit einer Abdeckung, insbesonderer einer Estrichschicht überdeckt ist.

5. Verfahren zum Herstellen einer Schicht aus Stoßenergie irreversibel absorbierendem Dämpfungsmaterial auf einer Unterlage zum Schutz einer Struktur, insbesondere eines Gebäudes, gegen Stöße, dadurch gekennzeichnet, daß man einen Beton mit Glasschaum-Granulat als Zuschlagstoff erzeugt, auf der Unterlage vergießt und sodann aushärten läßt.

6. Verfahren nach Anspruch 5, dadurch gekennzeichnet, daß man auf der Schicht aus Dämpfungsmaterial eine Estrichschicht vergießt und sodann aushärten läßt.

## Claims

1. Arrangement for the protection of a structure, especially of a building, against shocks, comprising at least one layer, which is provided on a foundation, of damping material which with use of glass gall irreversibly absorbs shock energy, characterised thereby that the glass gall is bound as granulate into a matrix material.

2. Arrangement according to claim 1, characterised thereby that the matrix material is cement or a cement-bound mass.

3. Arrangement according to claim 1 or 2, characterised thereby that the layer of damping material is arranged as a grouting layer on the foundation.

4. Arrangement according to one of claims 1 to 3, characterised thereby that the layer of damping material is covered by a covering, especially a flooring layer.

5. Method of producing a layer of damping material, which irreversibly absorbs shock energy, on a foundation for protection of a structure, especially of a building, against shocks, characterised thereby that a concrete with glass gall granulate as additive material is produced, poured onto the foundation and then allowed to set.

6. Method according to claim 5, characterised thereby that a flooring layer is poured onto the layer of damping material and then allowed to set.

## Revendications

1. Agencement pour la protection d'une structure, notamment d'un bâtiment, contre des coups, avec au moins une couche prévue sur un support en matériau d'amortissement absorbant d'une manière irréversible l'énergie des coups, en utilisant une mousse de verre, caractérisé en ce que la mousse de verre est liée comme granulat dans un matériau de matrice.

2. Agencement selon la revendication 1, caractérisé en ce que le matériau de matrice est du ciment ou une masse liée au ciment.

3. Agencement selon la revendication 1 ou 2, caractérisé en ce que la couche en matériau d'amortissement est disposée comme couche de scellement sur le support.

4. Agencement selon l'une des revendications 1 à 3, caractérisé en ce que la couche en matériau d'amortissement est recouverte d'une couche de recouvrement, notamment d'une couche en plâtre.

5. Procédé de fabrication d'une couche en matériau d'amortissement absorbant de manière irréversible l'énergie des coups sur un support pour protéger une structure, notamment un bâtiment, contre des coups, caractérisé en ce qu'on réalise un béton avec un granulat en mousse de verre comme agrégat, qu'on le coule sur le support et qu'on le laisse ensuite durcir.

6. Procédé selon la revendication 5, caractérisé en ce qu'on coule sur la couche en matériau d'amortissement une couche en plâtre et qu'on la laisse durcir.
